**Europäisches Patentamt**

**European Patent Office**

**Office européen des brevets**

(19)

(11) Numéro de publication: **0 194 915**
**B1**

(12)

# FASCICULE DE BREVET EUROPÉEN

(45) Date de publication du fascicule du brevet:
08.06.88

(21) Numéro de dépôt: 86400397.5

(22) Date de dépôt: 25.02.86

(51) Int. Cl.⁴: **B 60 R 16/02**, G 08 C 19/36

(54) Système de distribution commandée d'énergie électrique dans un véhicule automobile.

(30) Priorité: 27.02.85 FR 8502807

(43) Date de publication de la demande:
17.09.86 Bulletin 86/38

(45) Mention de la délivrance du brevet:
08.06.88 Bulletin 88/23

(84) Etats contractants désignés:
AT BE CH DE GB IT LI LU NL SE

(56) Documents cité:
CA-A-1 170 723
DE-A-2 744 031
DE-A-3 023 905
FR-A-2 158 900
FR-A-2 445 769
FR-A-2 474 189
FR-A-2 494 534
FR-A-2 499 344
FR-A-2 550 868
US-A-3 952 286

(73) Titulaire: **REGIE NATIONALE DES USINES RENAULT**, Boîte postale 103 8-10 avenue Emile Zola, F-92109 Boulogne- Billancourt (FR)

(72) Inventeur: **Couston, Christian**, 10, rue Albert Laurenson, F-92100 Boulogne (FR)
Inventeur: **Bonfiglio, Noel**, 3, avenue de la Passerelle, F-92210 Saint- Cloud (FR)
Inventeur: **Deville, Bernard**, 127, Chemin de Mrogiou, F-13009 Marseille (FR)
Inventeur: **Gras, Gilbert**, 17, boulevard des Chênes, F-13009 Marseille (FR)

(74) Mandataire: **Réal, Jacques**, Régie Nationale des Usines Renault SCE 0804, F-92109 Boulogne Billancourt Cedex (FR)

EP 0 194 915 B1

## Description

L'invention concerne un système de distribution commandée d'énergie électrique dans un véhicule automobile comportant des organes électriques devant être alimentés à partir d'une source d'énergie électrique selon des ordres de commande déterminés.

Actuellement, les organes électriques d'un véhicule automobile, tels que les feux de croisement, les clignotants, le moteur d'essuie-glaces ou autres sont connectés à la source d'énergie électrique, la batterie en l'occurence, par des fils d'alimentation passant par le tableau de bord au niveau duquel sont situés à la fois la majorité des moyens de commande tels que des commutateurs de cette distribution d'énergie et les moyens de protection contre les variations de courant tels que des fusibles.

Or le nombre d'organes équipant un véhicule automobile tels que des moyens de contrôle de fonctionnement véhicule mis à la disposition du conducteur, -capteurs de température ou de niveau, synthèse de la parole... -et les besoins d'interconnexion entre eux ne cessent de croître, entraînant une plus grande complexité dans la réalisation en câblage classique des liaisons électriques dans le véhicule. La longueur totale du câble dans un véhicule augmente ainsi que le nombre de défauts électriques qui est fonction du nombre d'interconnexions.

Une solution actuelle pour résoudre ces inconvénients de complexité de câblage électrique propose un nouveau système de communications à bord d'un véhicule qui notamment ne fait plus transiter l'énergie nécessaire aux organes électriques par le tableau de bord, de façon à réduire la longueur des fils d'alimentation et à supprimer totalement leurs connexions avec ce tableau de bord. La deamnde de brevet FR-A-2 494 534 décrit un tel système de commande.

La présente invention répond au même souci de réduction du câblage électrique dans un véhicule en proposant un système de distribution commandée d'énergie électrique présentant des améliorations par rapport au précédent, notamment au sujet des informations pouvant transiter des organes commandés vers le circuit transmetteur d'ordres.

Par rapport au FR-A- 2 494 534 qui décrit déjà un système de distribution commandée d'énergie électrique dans un véhicule automobile, qui comporte des organes électriques qui doivent être alimentés à partir d'une source d'énergie électrique telle qu'une batterie, et dont le fonctionnement doit être contrôlé, ce système comprenant:

- un premier module dit "maître", alimenté à partir de la source, connecté à des moyens de commande et capable d'émettre des signaux lumineux codés de commande en réponse à l'actionnement de commande, et
- au moins un second module dit "esclave", alimenté à partir de la source, connecté aux organes électriques capable de recevoir des signaux lumineux codés de commande provenant du module maître et de connecter en réponse l'énergie vers les organes électriques, l'invention est caractérisée en ce que:

- le module maître est capable de recevoir des signaux lumineux codés pour commander en réponse un dispositif d'affichage,
- chaque module esclave est capable d'émettre des signaux lumineux codés d'informations vers le module maître en réponse à des signaux électriques relatifs au fonctionnement desdits organes électriques, et d'émettre en plus des signaux lumineux codés d'informations relatifs au fonctionnement des organes électriques, des signaux lumineux codés d'informations relatifs à des capteurs tels que de niveau d'essence, de température, de vitesse, etc..,
- chaque module esclave comprend des moyens de surveillance et des moyens de protection des organes électriques, et
- les signaux lumineux codés sont des signaux infra-rouges.

Selon une autre caractéristique de l'invention, les moyens électroniques de traitement des modules maître et esclave comportent un microprocesseur associé à des circuits logiques.

Les avantages de ce système de distribution commandée d'énergie électrique résident tout d'abord dans la simplification à la fois de la conception du câblage et de son implantation dans le véhicule. Il permet également l'automatisation de la réalisation de ce câblage, la diminution du nombre de pièces nécessaires aux connexions, la facilité du dépannage. De plus, pour les véhicules actuels présentés avec différentes options pour un même modèle, un tel système permet l'implantation aisée de ces différentes options par simple modification du traitement des informations dans les modules c'est-à-dire modification des programmes internes aux microprocesseurs, sans modification du câblage proprement dit.

D'autres caractéristiques et avantages de l'invention apparaîtront à la lecture de la description qui suit, ilustrée par les figures qui représentent:
- la figure 1: le schéma synoptique d'un mode de réalisation d'un système de distribution d'énergie électrique selon l'invention;
- la figure 2: le schéma synoptique d'un module maître selon l'invention;
- la figure 3 : le schéma synoptique d'un module esclave selon l'invention;
- la figure 4: un exemple de réalisation d'un interface de puissance dans un module esclave selon l'invention.

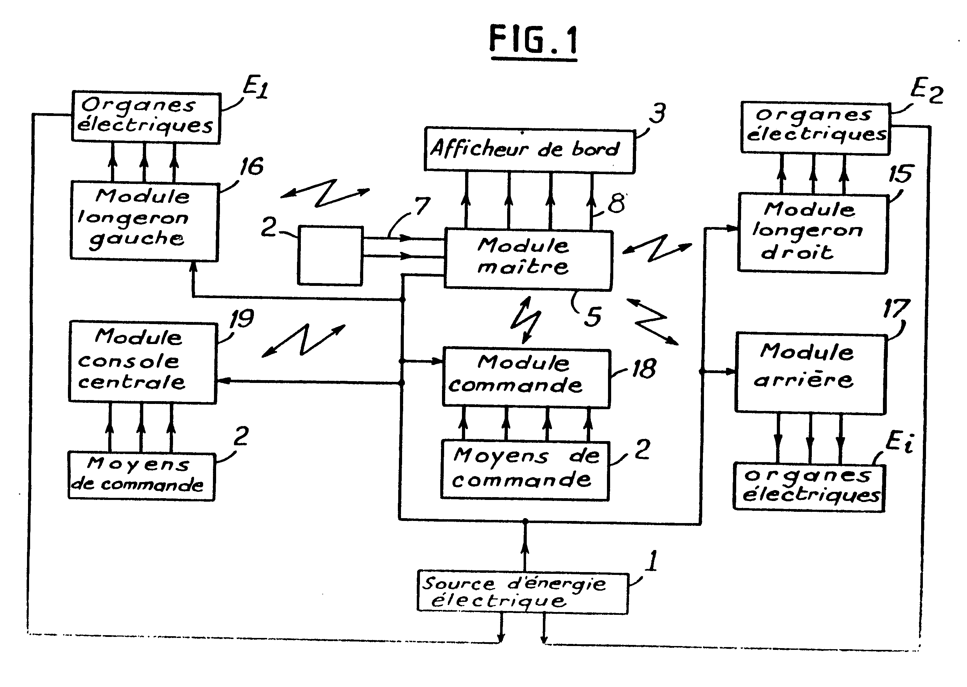

La figure 1 représente le schéma synoptique d'un mode de réalisation particulier d'un système de distribution commandée d'énergie électrique dans un véhicule automobile, selon l'invention. Ce véhicule comporte une source d'énergie électrique 1, une batterie par exemple, servant notamment à alimenter des organes électriques $E_1$, $E_2$, ... $E_i$, ... dont dispose le véhicule. Ces organes sont par exemple les feux de croisement à l'avant, les clignotants à l'avant et à l'arrière, la jauge à essence etc... Leur fonctionnement est commandé par le conducteur par l'intermédiaire de moyens de commande 2 ou d'actionnement situés en partie sur la planche de bord, près du tableau de bord 3 et en partie sur la console centrale entre les sièges avant. Sur l'afficheur du tableau de bord 3 sont disposés des moyens de contrôle du fonctionnement de ces organes $E_i$ aidant à la bonne conduite du véhicule.

Selon l'invention, la distribution d'énergie électrique à ces différents organes se fait à partir de modules électroniques consistant essentiellement en un microprocesseur associé à des circuits logiques destinés à remplir des fonctions bien déterminées.

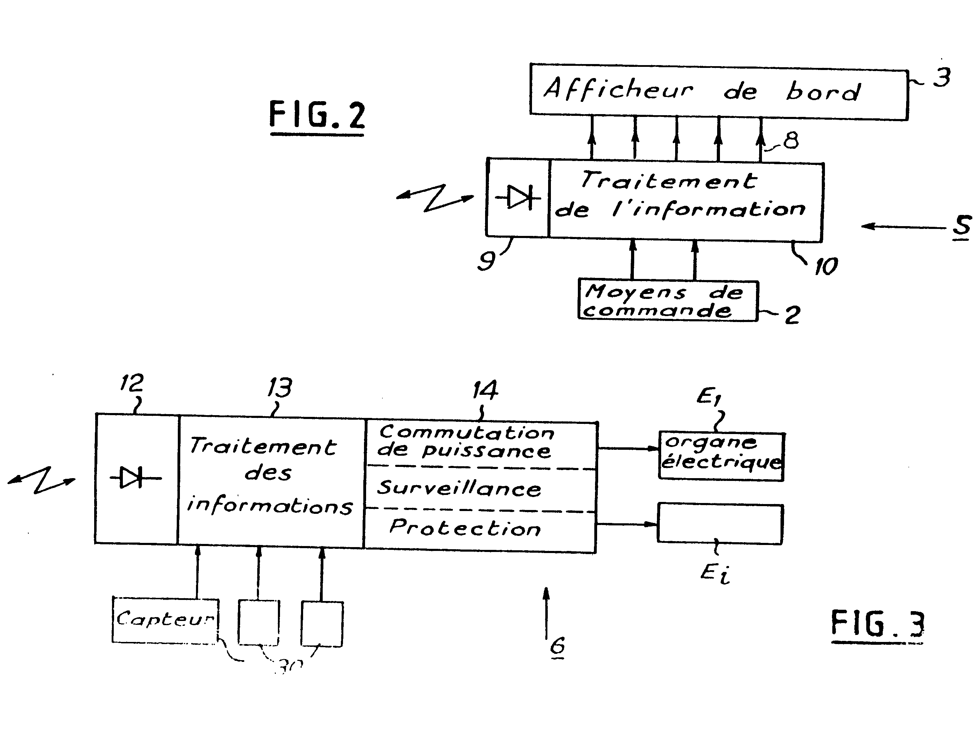

Le système comporte un premier module 5 dit maître et des modules 6 dits esclaves alimentés à partir de la source d'énergie 1. Le module maître 5 est généralement placé a proximité de l'afficheur du tableau de bord 3, derrière la planche de bord, et est destiné à assurer une grande partie du traitement des informations transitant à travers le système de distribution ainsi que la gestion des communications avec les autres modules. Il est connecté à l'afficheur de bord 3 par liaisons filaires 8 de faible longueur et supportent de faible intensité de courant. Les moyens de commande 2 tels que boutons-poussoirs ou manettes que le conducteur du véhicule actionne pour commander les organes électriques sont soit reliés directement par liaisons filaires 7 parallèles au module central soit reliés par de telles liaisons à un module esclave 6. Le module maître 3 comporte deux parties comme le montre la figure 2: la première comprend des moyens de connexion 9 avec les modules esclaves 6 par liaison série infra-rouge, permettant les communications entre le maître et les esclaves dans les deux sens. Les moyens sont par exemple des diodes électroluminescentes LED qui émettent par impulsions codées et des photodiodes pour la réception. La seconde partie du module maître 5 est constituée par des moyens de traitement 10 des informations transitant par ce module, informations reçues et/ou envoyées. Le traitement consiste d'une part en un codage et décodage des informations pour permettre la reconnaissance des adresses et des ordres de commandes ainsi que celle d'un message d'acquittement ou d'anomalie en vérification de la bonne exécution d'une commande et d'autre part en calculs des mesures devant apparaître sur l'afficheur du tableau de bord ainsi qu'en prises de décisions du déclenchement d'une alarme. Ces moyens de traitement sont réalisés à partir d'un microprocesseur par exemple.

Le système de distribution comporte aussi des modules esclaves 6, distincts du module maître 5, associés aux organes électriques $E_i$ qu'ils sont destinés à commander. Ils reçoivent les informations de commande envoyées par le module maître, sur ordre du conducteur qui a actionné les manettes par exemple, et commutent ou non l'énergie électrique provenant de la source d'énergie 1.

Ils reçoivent aussi les informations fournies par des capteurs placés à différents endroits du véhicule donnant par exemple le niveau d'huile, la température d'huile, la vitesse du véhicule etc. Ils renseignent aussi le conducteur sur le fonctionnement normal ou anormal des dispositifs électriques par l'émission d'informations au module maître 5, qui les traite pour actionner à son tour les moyens de contrôle, c'est-à-dire les différents voyants lumineux du tableau de bord par exemple. Pour remplir ces fonctions, chaque module esclave comporte une première partie (figure 3) comprenant des moyens de communication 12 avec le module maître 5 seulement par liaison série infra-rouge, ces moyens étant des diodes électroluminescentes émettrices et des photodiodes réceptrices par exemple. Chaque module esclave échange ainsi des informations avec le module maître 5 seul au moyen d'impulsions codées. Chaque module esclave 6 comporte de plus une seconde partie 13 de traitement des informations qui proviennent soit du module maître 3 soit des organes électriques $E_i$. Lorsque ces organes sont du type capteurs, destinés à donner des mesures de niveau, de température, etc..., ils sont directement reliés par liaisons filaires parallèles à cette partie 13 de traitement qui prend en charge ces mesures pour les faire apparaître sous forme lisible sur l'afficheur du tableau de bord. Par exemple, la jauge à essence réalisée sous forme de résistance variable transmet au module esclave 6 une information en volts et le microprocesseur de la partie 13 de traitement du module la transforme en litres ou en fractions de volume de réservoir. Lorsque les organes électriques sont du type consommateurs d'énergie comme les lampes, ils sont reliés à une troisième partie 14 du module esclave, partie servant d'interface de puissance entre le module et les organes. Cet interface 14 est lui-même réalisé à partir de trois sortes de moyens remplissant différentes fonctions: tout d'abord des moyens de commutation de l'énergie électrique vers le ou les organes électriques concernés ; des moyens de surveillance de l'état de cet organe électrique de façon à savoir si un court-circuit ou un circuit ouvert affecte son entrée, associés à des moyens de protection de l'organe contre ces court-circuits ou circuits ouverts.

Le nombre de modules esclaves est variable, dépendant du niveau de complexité du véhicule c'est-à-dire du nombre d'organes électriques à commander et de leur emplacement géographique dans le véhicule. Il paraît intéressant de prévoir comme le montre la figure 1 un module 15 pour le longeron droit et un module 16 pour le longeron gauche commandant les feux clignotants avant, les feux de position, de route ou la condamnation des portières par exemple. Inversement, par ces mêmes modules vont transiter les informations de température ou de niveau d'huile, d'usure des plaquettes de freins, de témoins d'allumage des feux données par différents capteurs placés à des endroits judicieux du véhicule et devant apparaître au conducteur sur l'afficheur du tableau de bord. On peut ajouter un module 17 pour les organes électriques situés à l'arrière du véhicule et par lequel vont transiter les informations de feux arrière ou de niveau d'essence dans le réservoir.

Lorsque les moyens de commande 2 des organes électriques sont nombreux et concernent des parties du véhicule de situations géographiques variées, il est possible de les relier à un ou plusieurs modules, un module de commande 18 par exemple placé sous le tableau de bord et relié aux commandes placées autour du volant du véhicule et un module 19 placé au niveau de la console centrale. Dans ces différents cas, les moyens de commande 2 sont reliés par liaisons parallèles filaires aux différents modules, communiquant eux-mêmes avec le module maître 5 par liaison série infra-rouge.

Concernant les liaisons infra-rouge entre le module maître et les modules esclaves 6, ce type de liaison offre l'avantage de ne pas nécessiter obligatoirement de support matériel ni un alignement parfait entre ces modules, facilitant aussi le montage des différents modules soit directement derrière la planche de bord soit en différents endroits du véhicule. En effet un écart de ± 10° angulaires entre les diodes émettrices et les photodiodes réceptrices est acceptable, ce qui permet de faire passer le faisceau infra-rouge par des chemins non linéaires et étroits et par des endroits quasiment inaccessibles du véhicule. La communication entre le module maître et les esclaves peut même ne pas se faire à vue mais utiliser par exemple les réflexions sur les parois de la planche de bord, dont on aura pu améliorer les qualités de réflexion. Les distances d'émission nécessaires sous une planche de bord sont voisines du mètre mais peuvent être étendues pour communiquer avec le reste du véhicule.

La liaison série entre ces modules se fait à une vitesse élevée, 40 Kbauds par exemple dans le but de réaliser une communication de type "polling" et de s'affranchir de tous les parasites lumineux basse fréquence mais nombreux.

L'alimentation en énergie électrique des modules est assurée à partir de la source 1 par l'intermédiaire d'un bus filaire classique par exemple comportant des épissures permettant de connecter tous les modules. Mais dans le cas d'un véhicule automobile dont la planche de bord est en matériau plastique il est possible d'y inclure un réseau métallique genre treillis, et disposer des connecteurs métallique dans la face interne de cette planche de bord, côté moteur, dans lesquels sont enfichés les modules dotés de cliquets et destiner ce réseau métallique à l'alimentation des modules, évitant ainsi le bus filaire. Grâce à cette réalisation le montage des modules peut être automatisé et simplifié, ce qui permet de réduire à la fois le temps et le coût des opérations de montage.

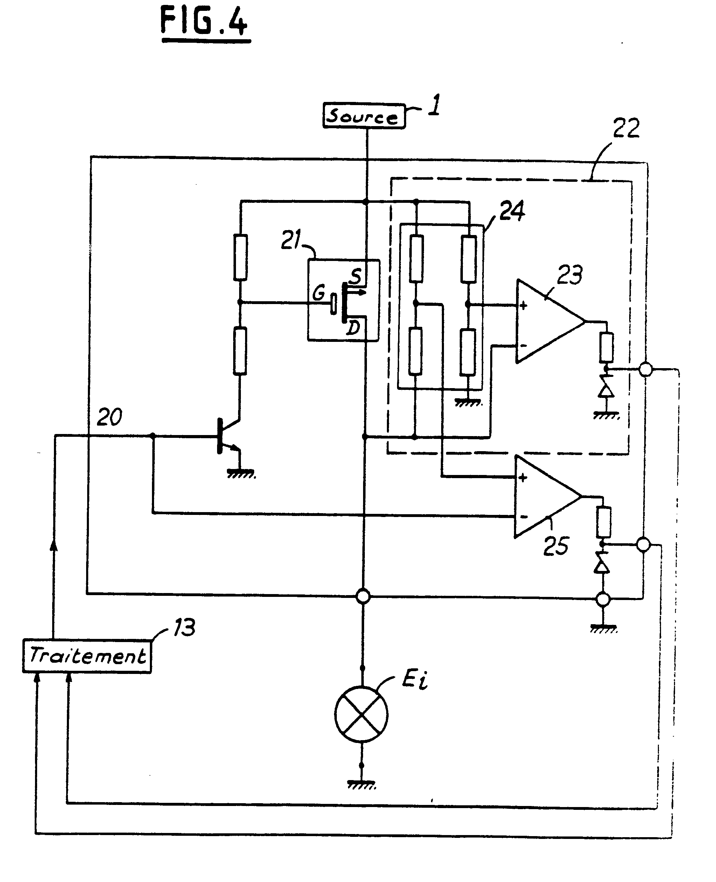

Précédemment a été mentionnée la partie 14 d'un module esclave 6 servant d'interface de puissance avec l'organe électrique à alimenter. La figure 4 représente un exemple de réalisation d'un tel dispositif 14 d'interface. Ce dispositif comporte une entrée 20 par laquelle arrivent les informations provenant des moyens de traitement 13 et donnant des ordres de commutation de l'organe électrique à la source d'énergie électrique 1. Cette commutation s'effectue grâce à un transistor de communication 21, du type bipolaire ou MOS comme représenté sur la figure 4, dont la borne source S est reliée à la batterie 1 du véhicule. Ce type de transistor présente l'avantage d'avoir une faible résistance en série, une bonne tenue en puissance tout en étant commandé a faible niveau de puissance. Par le drain D de ce transistor 21 circule un fort courant dans le cas où la communication entre la batterie et l'organe électrique est réalisée. Lorsque l'organe électrique Ei, une lampe par exemple, ne fonctionne plus, il y a un circuit ouvert entre cet organe et le drain du transistor, circuit ouvert qui est détecté par des moyens de comparaison 22 entre la tension sur le drain et la tension sur la source du transistor. Les moyens de comparaison sont par exemple constitués par un comparateur 23 associé à un pont de résistance 24. De même lorsqu'un court-circuit se produit, il est également détecté, par un comparateur 23, comparant la tension à l'entrée 20 à la tension sur le drain D du transistor 21. Ainsi la surveillance des courts-circuits et des charges non connectées est assurée et ces informations sont ensuite gérées dans la partie traitement 13 du module esclave 6 par un microprocesseur qui commande la coupure de l'alimentation du transistor et transmet une alarme au conducteur au niveau de l'afficheur du tableau de bord.

Ainsi le système de distribution commandée d'énergie électrique dans un véhicule automobile décrit auparavant présente l'avantage de réduire considérablement le réseau de fils transportant l'énergie de la batterie vers les différents organes électriques, et de ne plus concentrer ce réseau au niveau de la planche de bord. Pour cela, la transmission des ordres de commande de commutation des différents organes se fait par liaison série infra-rouge, entre des modules électroniques, encliquetés dans la planche de bord elle-même par exemple. De plus les fusibles traditionnels situés tous au niveau du tableau de bord sont remplacés par des moyens de protection situés au niveau de chaque organe.

L'invention ne se limite évidemment pas aux modes de réalisation décrits et représentés mais comprend également tous les équivalents techniques des moyens décrits et leurs combinaisons si celles-ci sont effectuées dans l'esprit de l'invention et mise en oeuvre dans le cadre des revendications suivantes.

**Revendications**

1. Système de distribution commandée d'énergie électrique dans un véhicule automobile, qui comporte des organes électriques ($E_1$, $E_2$, $E_i$) qui doivent être alimentés à partir d'une source d'énergie électrique (1) telle qu'une batterie, et dont le fonctionnement doit être contrôlé, ce système comprend:

- un premier module (5) dit "maître", alimenté à partir de la source (1), connecté à des moyens de commande (2) et capable d'émettre des signaux lumineux codés de commande en réponse à l'actionnement de commande, et

- au moins un second module (6) dit "esclave", alimenté à partir de la source (1), connecté aux organes électriques ($E_1$, $E_2$, $E_i$) capable de recevoir des signaux lumineux codés de commande provenant du module maître et de connecter en réponse l'énergie vers les organes électriques, caractérisé en ce que:

- le module maître (5) est capable de recevoir des signaux lumineux codés pour commander en réponse un dispositif d'affichage,

- chaque module esclave (6) est capable d'émettre des signaux lumineux codés d'informations vers le module maître en réponse à des signaux électriques relatifs au fonctionnement desdits organes électriques, et d'émettre en plus des signaux lumineux codés d'informations relatifs au fonctionnement des organes électriques, des signaux lumineux codés d'informations relatifs à des capteurs tels que de niveau d'essence, de température, de vitesse, etc..,

- chaque module esclave (6) comprend des moyens de surveillance et des moyens de protection des organes électriques ($E_1$, $E_2$, $E_i$), et

- les signaux lumineux codés sont des signaux infrarouges.

2. Système selon la revendication 1, et comprenant plus d'un module esclave, caractérisé en ce que chaque module esclave (6) échange des signaux lumineux codés avec le seul module maître (1).

3. Système selon la revendication 1 ou 2, caractérisé en ce que la vitesse d'émission des impulsions codées, en lumière infra-rouge, est de 40 Kbauds.

4. Système selon l'une des revendications 1 à 3, caractérisé en ce que les moyens électroniques (10) et (13) de traitement des modules maître (5) et esclaves (6) respectivement comportent un microprocesseur associé à des circuits logiques.

5. Système selon l'une des revendications 1 à 4, caractérisé en ce que l'interface de puissance (14) d'un module esclave (6) comporte une entrée (20) reliée aux moyens de traitement (13) de ce module, des moyens de commutation comprenant un transistor de commutation (21) dont la borne source (S) est reliée à la source d'énergie (1) et dont le drain (D) est relié à un organe électrique ($E_i$) à commuter, des moyens de surveillance des circuits ouverts et des courts-circuits entre l'organe et le drain du transistor associés aux moyens électroniques de traitement pour commander la coupure de l'alimentation du transistor.

6. Système selon la revendication 5, caractérisé en ce que des moyens de surveillance des circuits ouverts entre les organes électriques et le transistor de commutation (21) sont constitués par des moyens de comparaison (22) entre la tension sur le drain (D) et la tension sur la source (S) du transistor et en ce que les moyens de surveillance des courts-circuits sont constitués par des moyens de comparaison entre la tension à l'entrée (20) et la tension sur le drain (D) du transistor (21).

7. Système selon l'une des revendications 1 à 6, caractérisé en ce qu'il comporte un module esclave (15) associé au longeron droit du véhicule, un module esclave (16) associé au longeron gauche, un module esclave (17) associé aux longerons situés à l'arrière du véhicule.

8. Système selon l'une des revendications 1 à 7 caractérisé en ce que la totalité des moyens de commande (2) des organes électriques ($E_1$, $E_2$, $E_i$) est connectée par liaisons parallèles filaires au module maître (5).

9. Système selon l'une des revendications 1 à 7, caractérisé en ce qu'il comporte un module de commande (18) placé sous le tableau de bord et un module de commande (19) placé au niveau de la console centrale, ces deux modules de commande étant connectés chacun à des moyens de commande (2) et capables d'échanger des signaux codés infra-rouges avec le module maître (1).

10. Système selon l'une des revendications 1 à 9, caractérisé en ce que le module maître (5) est connecté à l'afficheur du tableau de bord (3) par liaisons filaires.

11. Système selon l'une des revendications 1 à 10, adapté à un véhicule comprenant une planche de bord en matière plastique, caractérisé en ce qu'un réseau métallique est inséré dans ladite planche de bord et que ce réseau comporte des cliquets métalliques dans lesquels sont enfichés les modules et en ce que le bus d'alimentation des modules est constitué par une partie déterminée de réseau métallique.

**Patentansprüche**

1. Gesteuertes elektrisches Energieverteilungssystem in einem Kraftfahrzeug, das elektrische Organe ($E_1$, $E_2$, $E_i$) aufweist, die von einer Energiequelle (1), wie einer Batterie, versorgt werden müssen und deren Betrieb kontrollier werden soll, wobei das System aufweist:

- ein erstes "Leit"-Modul (5), das von der Quelle (1) versorgt wird und mit einer Steueranordnung (2) verbunden ist und das in der Lage ist, codierte optische Steuersignale als Antwort auf eine Steuerbetätigung auszusenden und

- wenigstens ein zweites "Folge"-Modul (6), das von der Quelle (1) versorgt wird und mit den elektrischen Organen ($E_1$, $E_2$, $E_i$) verbunden ist und dem die optischen codierten Steuersignale des Leitmoduls zugeführt werden und das daraufhin die elektrischen Organe mit Energie versorgt, dadurch gekennzeichnet, daß

- das Leitmodul (5) in der Lage ist, die codierten Lichtsignale zu empfangen, um als Antwort darauf eine Anzeigevorrichtung zu steuern,

- jedes Folgemodul (6) in der Lage ist, codierte Informations-Lichtsignale in Richtung des Leitmoduls auszusenden als Antwort auf elektrische Signale, die sich auf die Funktionsweise der elektrischen Organe beziehen und außerdem codierte Informations-Lichtsignale auszusenden, die sich auf die Funktionsweise der elektrischen Organe beziehen, codierte Informations-Lichtsignale, die sich auf Fühler beziehen, wie z. B. Benz instand, Temperatur, Geschwindigkeit etc...,

- jedes Folgemodul (6) eine Überwachungsanordnung aufweist und eine Schutzanordnung für die elektrischen Organe ($E_1$, $E_2$, $E_i$) und

- die codierten Lichtsignale Infrarot-Signale sind.

2. System nach Anspruch 1, mit mehreren Folgemodulen, dadurch gekennzeichnet, daß jedes Folgemodul (6) codierte Lichtsignale mit dem einzigen Leitmodul (1) austauscht.

3. System nach Anspruch 1 oder 2, dadurch gekennzeichnet, daß die Aussendegeschwindigkeit der codierten infraroten Lichtimpulse 40 Kbaud beträgt.

4. System nach einem der Ansprüche 1 bis 3, dadurch gekennzeichnet, daß die elektronischen Anordnungen (10 und 13) zur Verarbeitung der Leitmodule (5) und der Folgemodule (6) einen Mikroprozessor aufweisen, der mit logischen Schaltkreisen verbunden ist.

5. System nach einem der Ansprüche 1 bis 4, dadurch gekennzeichnet, daß die Leistungsschnittstelle (14) eines Folgemoduls (6) einen Eingang (20) aufweist, der mit der Verarbeitungsanordnung (13) dieses Moduls verbunden ist, eine Umschaltanordnung mit einem Umschalttransistor (21), dessen Quellenanschluß (S) mit der Energie quelle (1) verbunden ist und dessen Senke (D) mit einem zu schaltenden elektrischen Organ ($E_i$) verbunden ist und eine Anordnung zur Überwachung der offenen und der kurzgeschlossenen Schaltkreise zwischen dem Organ und der Transistorsenke, die der elektronischen Verarbeitungsanordnung zugeordnet ist, um das Unterbrechen der Transistorversorgung zu steuern.

6. System nach Anspruch 5, dadurch gekennzeichnet, daß die Überwachungsanordnung der offenen Schaltkreise zwischen den elektrischen Organen und dem Umschalttransistor (21) aus einer Vergleicheranordnung (22) besteht, zwischen der Spannung an der Senke (D) und der Spannung an der Quelle (S) des Transistors und daß die Überwachungsanordnung für die kurzgeschlossenen Schaltkreise aus einer Vergleicheranordnung besteht fur die Spannung am Eingang (20) und die Spannung an der Senke (D) des Transistors (21).

7. System nach einem der Ansprüche 1 bis 6, dadurch gekennzeichnet, daß es ein Folgemodul (15) aufweist, das dem rechten Längsträger des Fahrzeugs zugeordnet ist, ein Folgemodul (16) aufweist, das dem linken Längsträger zugeordnet ist und ein Folgemodul (17) aufweist, das den im Heck des Fahrzeugs angeordneten Trägern zugeordnet ist.

8. System nach einem der Ansprüche 1 bis 7, dadurch gekennzeichnet, daß die Gesamtheit der Steueranordnung (2) der elektrischen Organe ($E_1$, $E_2$, $E_i$) über parallele Drahtverbindungen mit dem Leitmodul (5) verbunden ist.

9. System nach einem der Ansprüche 1 bis 7, dadurch gekennzeichnet, daß es ein Steuermodul (18) aufweist, das unter dem Armaturenbrett angeordnet ist und ein Steuermodul (19), das auf Höhe der Mittenkonsole angeordnet ist, wobei diese beiden Steuermodule jeweils mit dem Steuermodul (2) verbunden sind und codierte Infrarotsignale mit dem Leitmodul (1) austauschen können.

10. System nach einem der Ansprüche 1 bis 9, dadurch gekennzeichnet, daß das Leitmodul (5) mit der Anzeigevorrichtung am Armaturenbrett (3) über Drähte verbunden ist.

11. System nach einem der Ansprüche 1 bis 10, geeignet für ein Fahrzeug mit einem Armaturenbrett aus Kunststoff, dadurch gekennzeichnet, daß ein metallisches Netz in das Armaturenbrett eingelassen ist und daß das Netz metallische Klammern aufweist, in die die Module einschnappen und daß die Versorgungsleitung der Module aus einem bestimmten Abschnitt des metallischen Netzes besteht.

**Claims**

1. A system for the controlled distribution of electrical power in a motor vehicle which comprises electrical members ($E_1$, $E_2$, $E_i$) which are to be supplied from an electrical power source (1) such as a battery and the operation of which is to be monitored, said system comprising:

- a first module (5) referred to as the "master" module which supplied from the source (1) and connected to control means (2) and capable of emitting coded light control signals in response to control actuation, and

- at least one second module (6) which is referred to as the "slave" module, which is supplied from the source (1) and is connected to the electrical members ($E_1$, $E_2$, $E_i$) and capable of receiving coded light control signals from the master module and in response connecting the power to the electrical members, characterised in that

- the master module (5) is capable of receiving coded light control signals for controlling a display means in response,

- each slave module (6) is capable of emitting coded light signals in respect of items of information to the master module in response to electrical signals relating to the operation of said electrical members and also emitting coded light signals in respect of items of information relating to the operation of the electrical codedlight signals in respect of items of information relating to sensors such as petrol level, temperature, speed, etc...,

- each slave module (6) comprises monitoring means and protection means for the electrical members ($E_1$, $E_2$, $E_i$), and

- the coded light signals are infra-red signals.

2. A system according to claim 1 and comprising more than one slave module characterised in that each slave module (6) exchanges coded light signals only with the master module (1).

3. A system according to claim 1 or claim 2 characterised in that the rate of emission of the infra-red light coded pulses is 40 Kbauds.

4. A system according to one of claims 1 to 3 characterised in that the electronic processing means (10 and 13) of the master module (5) and slave modules (6) respectively comprise a microprocessor associated with logic circuits.

5. A system according to one of claims 1 to 4 characterised in that the power interface (14) of a slave module (6) comprises an input (20) connected to the processing means (13) of said module, switching means comprising a switching transistor (22) whose source terminal (S) is connected to the power source (1) and whose drain (D) is connected to an electrical member ($E_i$) to be switched and/means for monitoring open circuits and short circuits between the member and the drain of the transistor, which are associated with the electronic poocessing means, for controlling an interruption in the feed to the transistor.

6. A system according to claim 5 characterized in that means for monitoring short circuits between the electronic members and the switching transistor (21) are formed by means (22) for comparison between the voltage at the drain (D) and the voltage at the source (S) of the transistor and that the means for monitoring short circuits are foreed by means for comparison between the voltage at the input (20) and the voltage at the drain (D) of the transistor (21).

7. A system according to one of claims 1 to 6 characterised in that it comprises a slave module (15) associated with the right-hand side member of the vehicle, a slave module (16) associated with the left-hand side member of the vehicle, and a slave module (17) associated with the side members disposed at the rear of the vehicle.

8. A system according to one of claims 1 to 7 characterised in that all of the control means (2) for the electrical members ($E_1$, $E_2$, $E_i$) are connected to the master module (5) by parallel wire connections.

9. A system according to one of claims 1 to 7 characterised in that it crises a control module (18) which is disposed under the instrument panel and a control module (19) which is disposed at the location of the central console, said two control modules each being connected to control means (2) and being capable of exchanging infra-red coded signals with the master module (1).

10. A system according to one of claims 1 to 9 characterised in that the master module (5) is connected to the display means of the instrument panel (3) by wire connections.

11. A system according to one of claims 1 to 10 which is suited to a vehicle comprising an insrument panel of plastics material caracterised in that a metal network is inserted into said instrument panel and that said network comprises metal catches in which the modules are engaged and that the supply bus of the modules is formed by a given portion of the metal network.

# FIG.1

## FIG.2

**Afficheur de bord** ~3

↑ ↑ ↑ ↑ ↑ 8

9 ⫩ | **Traitement de l'information** | ← S

10

↑ ↑

**Moyens de commande** ~2

---

12 · 13 · 14 · E₁

| ⫩ | **Traitement des informations** | **Commutation de puissance** | → | **organe électrique** |
| | | **Surveillance** | | |
| | | **Protection** | → | |

Eᵢ

↑ ↑ ↑

**Capteur**  ☐  ☐

~30

6

## FIG.3

0 194 915

# FIG.4